# EUROPEAN PATENT APPLICATION

(11) **EP 2 148 150 A2**
(43) Date of publication of application: **27.01.2010**
(21) Application number: 09490002.4
(22) Date of filing: 20.07.2009
(51) Int. Cl.: F24J 2/04, F24J 2/08, F24J 2/26

(54) **Device for collecting and concentrating solar energy and transmitting it to a heat carrier fluid**

(30) Priority: 23.07.2008 SM 200800044
(71) Applicant: Mastertag S.A., 47896 Faetano (SM)
(72) Inventor: Rocchetti, Valter, 47900 Rimini (RN) (IT)

(57) **Abstract**

A device (1) for collecting and concentrating solar energy, and for transmitting it to a heat carrier fluid (9), comprises a shell-shaped structure (2) having a convex outer extrados surface (3) which can be exposed to solar radiation and a concave intrados surface (4); and means (5) for concentrating and absorbing solar radiation, the latter being housed in a space (10) inside the shell-shaped structure (2). The means (5) for concentrating and absorbing solar radiation have lenses (6) for optically focusing on a limited area of at least one pipe (7) for conveying the heat carrier fluid (9), the solar radiation vice versa striking an extensive area of the extrados surface (3); and at least one wall (8), extending in such a way that it projects from at least one pipe (7), the lenses (6) focusing the solar radiation collected by the extrados surface (3) on said wall. [Figure 1]

## Description

The present invention relates to the technical sector concerning the use of solar energy to heat a fluid.

More particularly, the invention relates to a device designed to be able to be integrated in a building structure, for collecting solar radiation energy striking the structure, concentrating said energy, and transmitting it to a heat carrier fluid circulating in a service network, for example water for civil use.

Some prior art devices, of the above-mentioned type, basically comprise a shell-shaped structure, made of transparent material, which has a convex extrados surface that can be exposed to solar radiation and a concave intrados surface, below which, inside the shell-shaped structure, there are housed means for concentrating the solar radiation and one or more pipes for conveying a fluid to be heated.

The concentrating means consist of lenses for optically focusing on a limited area of the outer surface of the conveying pipe the solar radiation which strikes an extensive area of the extrados surface and which then passes through the shell-shaped structure from the outside towards the inside.

Devices made in that way for collecting solar energy are known to operate with rather low level theoretical energy exchanges, meaning that in their field of use there is a considerable general problem of having available actual equipment with high operating efficiency, that is to say, such that it does not further penalise the modest economic benefit which can actually be derived by using solar energy for heating water.

Within said general objective solutions were proposed which involve intensifying the heating action - above all in conditions with limited exposure to the sun - by optical concentration, using lenses, (for example with Fresnel lenses) of the solar radiation collected by the extrados surface of the shell-shaped structure.

However, such types of solution, although having demonstrated operating performance of some interest, have several disadvantages which significantly penalise their performance.

Indeed, the solar radiation is focused directly on the outer surface of the tube which conveys the liquid to be heated. Since this is a cylindrical surface, the focusing surface is limited to a rather restricted area of the outer surface of the tube. Indeed, moving from one point to another of said surface, the distances of the points of the tube from the surface of the lens vary rapidly and consequently the same also happens for focusing conditions.

Moreover, focusing is quite sensitive even to small errors which occur when positioning the tubes inside the shell-shaped structure, which may have a quite significant effect on optimum focusing conditions, penalising the efficiency of the device heat exchange.

The main aim of the invention is to overcome the above-mentioned disadvantages with a device designed in such a way that it allows optimum overall optical focusing of solar radiation, preferably in the whole device view angle, to easily and constantly give the highest levels of efficiency in the use of solar energy.

The invention also has for an aim to provide a device which allows the set up of optimum focusing conditions in any actual practical situation, so that it is practically insensitive to positioning errors and/or to external influences such as its fitting and its integration in the building structures for which it is intended.

It also has for an aim to provide a device which is simple and inexpensive to make, allowing the production of heating systems that use solar energy which can be paid for in short time intervals and which also provide lasting economic benefits.

The technical features of the present invention, in accordance with the above aims, are clear from the content of the claims herein, in particular claim 1 and, also, from any of the claims directly or indirectly dependent on claim 1.

The advantages of the present invention are also more apparent in the detailed description which follows, with reference to the accompanying drawings which illustrate a preferred, non-limiting embodiment of the invention, in which:
- Figure 1 is an assembly view of a device in accordance with the invention, shown in cross-section;
- Figure 2 is a schematic and example illustration of a building structure with a plurality of devices made in accordance with the invention integrated in it;
- Figure 3 is an enlarged schematic view of a construction detail of the invention.

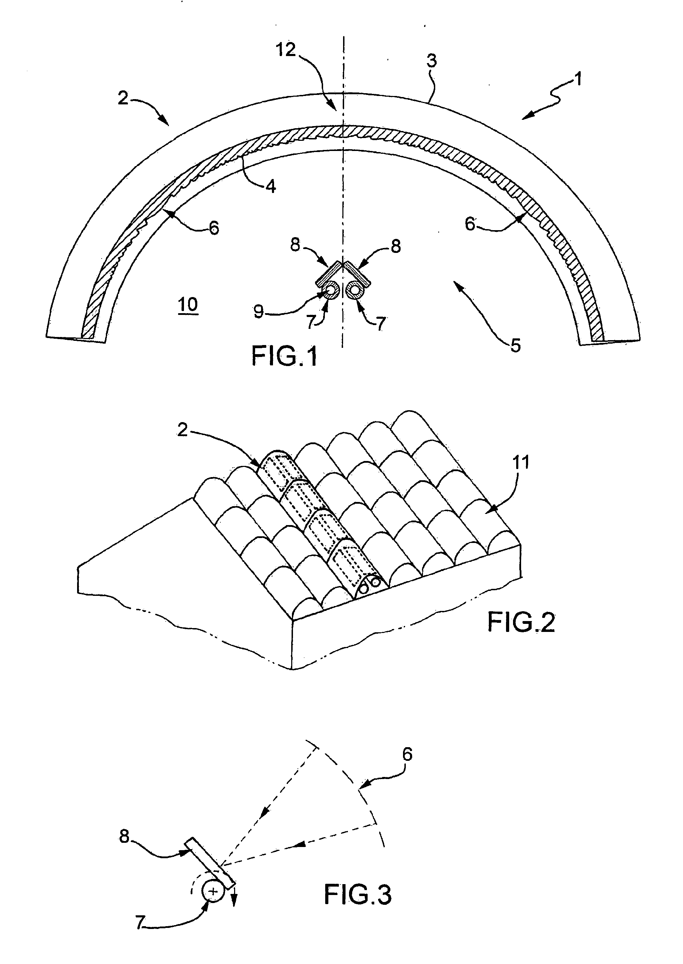

With reference to the accompanying drawings, in Figure 1 the numeral 1 denotes as a whole a device for collecting solar irradiation energy, for concentrating it and then for transmitting it to a heat carrier fluid 9, represented in particular and, for example, by the water of a plumbing system for civil use.

The device 1 basically comprises a shell-shaped structure 2, the inside of which is equipped with concentrating and absorbing means 5 for concentrating the solar radiation and for heat exchange of the associated energy with the heat carrier fluid 9.

More particularly, the shell-shaped structure 2, made of an optically transparent material such as glass, polycarbonate and similar materials, has a convex extrados outer surface 3 which can be exposed to solar radiation and a concave intrados inner surface 4, below which an empty space is delimited, labelled 10 as a whole, also housing one or more pipes 7 which convey the fluid 9 to be heated by the solar radiation.

The means 5 for concentrating and absorbing the solar radiation basically comprise lenses 6 connected to the intrados surface 4 and designed to optically focus on a limited area of at least one of the pipes 7 for conveying the heat carrier fluid 9, the solar radiation vice versa striking an extensive area of the extrados surface 3.

Said means 5 also comprise a metal wall 8 which is a good heat conductor, extending in such a way that it projects from each pipe 7, and on which said lenses 6 focus the solar radiation collected by the extrados surface 3.

The wall 8 is substantially flat. It basically extends at a tangent to the pipe 7 and it is rendered a single piece with the pipe 7, preferably by welding.

As Figure 1 shows, in the device 1, the shell-shaped structure 2 preferably has a roughly semicylindrical shape or the shape of half a truncated cone. Attached to said structure, on the inside and on both sides of a plane of symmetry 12, there are two separate pipes 7.

Each pipe 7, equipped with the relative wall 8, is substantially for absorbing the solar radiation collected by the two halves of the extrados surface 3 into which the latter is ideally divided by the plane of symmetry 12.

Figure 2 shows how the device 1 may advantageously be connected to a building structure 11 (for example a gable roof, covered with bent tiles) in the form of orderly batteries of elements, each of which has the focusing and absorbing walls 8 which although lying obliquely are arranged in such a way that they are substantially equidistant or at a slight angle relative to the surface of the building structure 11.

If the walls 8, that is to say the metal plates of which the walls are made, are of lengths such that they cover the total corresponding longitudinal dimension of the shell-shaped structure 2 of each device 1, the arrangement in a battery of a plurality of such devices 1 allows all of the solar radiation striking the surface of the building structure 11 to be collected and absorbed.

The focusing lenses 6 are preferably Fresnel lenses 6 which in particular may be cylindrical, or shaped with circular grooves and/or distributed on the extrados surface 3, if necessary also in the form of groups organised in matrix arrangements.

The lenses 6 can be focused quite easily even with walls 8 whose transversal dimensions are quite limited.

Consequently, the plates of which the walls 8 consist may advantageously be made in the form of extended rectangular strips having a relatively limited transversal dimension compared with their length. This means, on one hand relatively low costs for device 1 materials and on the other hand the aesthetic advantage of offering the building structure 11 a rather attractive visual impact in harmony with the traditional shapes of said structures 11.

The invention described fulfils the objectives for which it was designed and, amongst the other advantages indicated above, also brings the advantage of easy and immediate focusing even with approximate positioning of the pipes 7 inside the shell-shaped structure 2 housing space 10. Figure 2 clearly shows this if observed while considering that: the extension of the wall 8 relative to the drawing of the pipe 7, its obliqueness and the possibility of rotating integrally with the pipe 7 about the axis of the pipe 7 allow perfect adjustment of the conditions for focusing solar radiation in all situations recurring in practice, even in the presence of non-negligible relative positioning and fitting errors for the pipes 7 and the shell-shaped structure 2.

Two levels of advantages are derived from this, the first of which can be traced back to more efficient use of solar energy than is possible in conventional devices; the second in terms of the speed with which the device 1 can be fitted in the building structures 11 with which it is designed to be integrated.

The invention described above is susceptible of industrial application and may be modified and adapted in several ways without thereby departing from the scope of the inventive concept. Moreover, all details of the invention may be substituted by technically equivalent elements. Obviously, alternative embodiments of the invention are possible, which, to improve average surface focusing - in some special cases - may also have slight curvatures of the wall 8. Said curvatures could be advantageous if made preferably in the short side of wall extension (that visible in Figure 3 in the accompanying drawings).

## Claims

1. A device for collecting and concentrating solar energy, and for transmitting it to a heat carrier fluid (9), comprising a shell-shaped structure (2) having a convex outer extrados surface (3) which can be exposed to solar radiation and a concave intrados surface (4); and means (5) for concentrating and absorbing solar radiation, the latter being housed together with at least one pipe (7) for conveying the fluid (9) in a space (10) inside the structure (2) delimited by the intrados surface (4); the means (5) for concentrating and absorbing solar radiation having lenses (6) for optically focusing on the heat carrier fluid (9) the solar radiation which strikes the extrados surface (3); the device (1) being **characterised in that** it comprises at least one wall (8), extending in such a way that it projects from at least one pipe (7), the lenses (6) focusing the solar radiation collected by the extrados surface (3) on said wall.

2. The device according to claim 1, **characterised in that** the wall (8) is substantially flat.

3. The device according to claim 2, **characterised in that** the wall (8) has a slight curvature preferably being made relative to its dimension transversal to the axis of the pipe (7).

4. The device according to claim 2 or 3**, characterised in that** the wall (8) extends substantially at a tangent to the pipe (7).

5. The device according to claim 1, **characterised in that** it comprises a plurality of walls (8) distributed along the profile of the pipe (7).

6. The device according to claim 1, which can be connected to a building structure (11), **characterised in that** the one or each wall (8) can be positioned obliquely and in a condition in which it is equidistant or at a slight angle relative to the surface of the building structure (11).

7. The device according to claim 6, in which the building structure (11) is a gable roof, the device being **characterised in that** the one or each wall (8) projecting from the pipe (7) is equidistant or only at a slight angle relative to one sloping plane of the roof.

8. The device according to any of the foregoing claims, **characterised in that** the wall (8) comprises a metal operating plate.

9. The device according to claim 8, **characterised in that** the metal plate is structurally integral with the pipe (7).

10. The device according to claim 9, **characterised in that** the metal plate is welded to the pipe (7).

11. The device according to any of the foregoing claims from 6 to 10, **characterised in that** the metal plate has longitudinal and transversal dimensions, one of which is longer than the other.

12. The device according to claim 11, **characterised in that** the plate has a longitudinal dimension substantially close to the extension of the corresponding dimension of the shell-shaped structure (2).

13. The device according to claim 1, **characterised in that** it comprises two pipes (7), each pipe comprising at least one wall (8).

14. The device according to claim 1, **characterised in that** the lenses (6) are Fresnel lenses (6).

15. The device according to claim 13, **characterised in that** the lenses (6) are cylindrical.

16. The device according to claim 13, **characterised in that** the lenses (6) are shaped with circular grooves.

17. The device according to claim 13, **characterised in that** the lenses (6) are distributed on the extrados surface (3) in matrix arrangements.

18. A building structure **characterised in that** it comprises a plurality of devices (1) according to the foregoing claims, said devices being organised in orderly groups.
